Europäisches Patentamt

**European Patent Office**

**Office européen des brevets**

(19)

(11) Numéro de publication: **0 014 165 B1**

(12) **FASCICULE DE BREVET EUROPEEN**

(45) Date de publication du fascicule du brevet: **14.12.83**

(21) Numéro de dépôt: **80420006.1**

(22) Date de dépôt: **16.01.80**

(51) Int. Cl.³: **C 22 B 9/02, C 22 B 21/06, B 01 D 39/20**

(54) **Bloc de filtration pour métaux et alliages liquides à effet mécanique et physico-chimique et procédé de fabrication dudit bloc.**

(30) Priorité: **19.01.79 FR 7902143**

(43) Date de publication de la demande:
**06.08.80 Bulletin 80/16**

(45) Mention de la délivrance du brevet:
**14.12.83 Bulletin 83/50**

(84) Etats contractants désignés:
**AT CH DE GB NL SE**

(56) Documents cités:
**DE - A - 2 519 807**
**FR - A - 2 305 407**
**FR - A - 2 308 605**
**FR - A - 2 375 328**
**FR - A - 2 375 329**
**US - A - 3 305 351**
**US - A - 3 907 962**
**US - A - 4 056 586**

(73) Titulaire: **SERVIMETAL**
**23 bis, rue Balzac**
**F-75008 Paris (FR)**

(72) Inventeur: **du Manoir de Juaye, Pierre**
**Route de Lyon Vimines**
**F-73160 Cognin (FR)**
Inventeur: **Guerit, Pierre**
**8, boulevard du Théâtre**
**F-73000 Chambéry (FR)**
Inventeur: **Pollet, Gilbert**
**Rue du Pré Joli**
**F-73490 La Ravoire (FR)**
Inventeur: **Vassiliadis, Marc**
**Résidence de l'Orangerie 26, rue de Tourville**
**F-78100 Saint Germain en Laye (FR)**

(74) Mandataire: **Pascaud, Claude et al,**
**PECHINEY UGINE KUHLMANN 28, rue de Bonnel**
**F-69433 Lyon Cedex 3 (FR)**

Courier Press, Leamington Spa, England.

## Bloc de filtration pour métaux et alliages liquides, à effet mécanique et physico-chimique et procédé de fabrication dudit bloc

La présente invention concerne un bloc de filtration à effet mécanique et physico-chimique pour métaux liquides et, en particulier, pour l'aluminium et les alliages à base d'aluminium, le magnésium et les alliages à base de magnesium.

Tant dans la fonderie de pièces que dans la coulée semi-continue de plaques, billettes ou lingots et dans la coulée continue, on a reconnu la nécessité, pour obtenir des pièces saines, exemptes de défauts, de traiter le métal en vue éliminer les impuretés, et en particulier les inclusions qui altéreraient les propriétés des produits coulés. Ces opérations peuvent être de nature purement mécanique, telle que la filtration, ou physico-chimique, telle que la mise en contact avec des flux.

Dans la pratique, on procède à une filtration mécanique et à un lavage au moyen d'un flux constitué le plus souvent par un ou plusieurs halogénures de métaux alcalins et alcalinoterreux fondus qui facilite le mouillage des inclusions et leur rassemblement sous forme de crasses.

Les inclusions non mouillées par le métal et mouillées par les flux, parvenant à une interface métal liquide-flux liquide ainsi créée, sont piégées à cette interface et pénètrant dans le flux liquide. Elles sont extirpées du métal liquide au cours de ce lavage.

De nombreux brevets décrivent des procédés et des dispositifs permettant à la fois le lavage du métal par un flux et sa filtration au travers de masses poreuses.

On peut citer notamment les brevets des Etats Unis: US—A 2 863 558, 3 006 473, 3 010 712, 3 025 155, 3 039 864, 3 172 757, 3 821 238, 3 737 305 au nom d'ALCOA; les brevets anglais GB—A 1 266 500 et français FR—A 2 061 246 au nom de BACO (British aluminium C°); les brevets français FR—A 1 254 899 et 1 258 674 et anglais GB—A 1 148 344 de FOSECO; américain US—A 3 227 547 d'UNION CARBIDE et, plus récemment, les brevets américains US—A 3 893 917, 3 962 081, 3 947 363 et 4 075 303 d'ALUSUISSE qui décrivent des masses céramiques poreuses pour la filtration de l'aluminium liquide.

On peut également citer le brevet français FR—A 2 375 328 d'ALUSUISSE, qui décrit un procédé d'élimination du sodium par passage de l'aluminium liquide sur un lit filtrant en grains réfractaires imprégné d'un flux solide constitué par du chlorure de sodium et soumis à une injection de chlore, et le brevet US—A 3 305 351 (Reynolds Metals C°) qui décrit l'élimination des impuretés métalliques telles que le Li, Na, Mg par passage le l'aluminium liquide sur un lit filtrant composé de grains de fluorure d'aluminium.

Ces procédés ont été considérés comme satisfaisants pendant de nombreuses années. Mais, à l'heure actuelle, les exigences de la construction aéronautique, des bandes minces pour boîtage, des feuilles minces, des fils fins, obligent les producteurs de demi-produits en métaux et alliages légers à en améliorer sans cesse la qualité d'autant plus que l'affinage des méthodes analytiques a montré que des inclusions microscopiques, tenues jusqu'alors pour négligeables, pouvaient altérer certaines caractéristiques mécaniques et augmenter les taux de rebuts et, parfois, rendre inopérants, voire nocifs, certains traitements thermiques poussés, pratiqués au voisinage du point de fusion des constituants eutectiques des alliages.

La présente invention permet d'obtenir un niveau de propreté du métal nettement supérieur aux procédés connus.

Elle concerne un bloc de filtration pour métaux et alliages liquides, et plus particulièrement pour l'aluminium, le magnésium, les alliages à base d'aluminium et à base de magnésium, formé d'éléments dont au moins la partie externe est constituée par un composé minéral actif à base de fluorures métalliques, agissant à la fois par effet mécanique et physico-chimique, possédant une structure à porosités ouvertes, caractérisé en ce qu'il est formé d'éléments frittés par maintien à une température inférieure de 5 à 150°C à la température de fusion du composé minéral actif pendant une durée comprise entre 5 mn et 2 h. Le composé minéral actif est choisi parmi les fluorures alcalins, alcalino-terreux, de magnésium et d'aluminium, pris séparément ou en mélange ou en combinaison, et son point de fusion doit être de préférence supérieur à 800°C et, en tous les cas, supérieur à la température à laquelle le métal ou alliage à filtrer est amené le bloc de filtration.

L'invention concerne également un procédé de fabrication d'un bloc de filtration élémentaire pour métaux liquides, à effet mécanique et physico-chimique, caractérisé en ce que l'on fritte en atmosphère sèche et à température élevée, de façon à former une structure à porosités ouvertes, des éléments dont au moins la partie externe est constituée par un composé minéral actif.

Dans tout ce qui suit, nous désignerons par les expressions:

— "métal à filtrer": le métal ou alliage destiné à subir le traitement de filtration sur le bloc selon l'invention,
— "composé mineral actif": un sel minéral, un mélange ou une combinaison de sels minéraux jouant le rôle de flux en agissant par effet chimique et/ou physico-chimique sur les inclusions et impuretés diverses présentes dans les métaux à traiter et dont l'action aboutit finalement à éliminer les inclusions et impuretés du métal filtré,
— "Frittage": un procédé d'agglomération permettent de former à partir des éléments de composé minéral actif, une structure poreuse mécaniquement stable, à la température de filtration;
— "éléments": les éléments dont le frittage constitue le bloc filtrant, quelle que soit leur forme: grains de forme géométrique régulière, cristaux, grains à cassure irrégulière, grains de forme allongée et même grains aciculaires, bâtonnets ou fibres à section circulaire ou quelconque.

L'idée générale de la présente invention est de regrouper en une structure unique la filtration purement mécanique, qui permet de retenir les inclusions et autres éléments étrangers dont la dimension est supérieure à celle des canaux du filtre, et la purification physicochimique sous l'effet d'un composé minéral actif agissant comme flux qui permet de piéger les inclusions à l'interface flux-métal liquide.

Il est apparu que les flux se prêtant le mieux à l'agglomération et ayant, par ailleurs, un point de fusion plus élevé que la température à laquelle se présentant les métaux et alliages à purifier, étaient essentiellement les fluorures minéraux et, en particulier, les fluorures alcalins, alcalino-terreux, de magnésium et d'aluminium. L'emploi de sels de sodium, théoriquement possible, est cependant à rejeter dans le cas du traitement d'aluminium et de la plupart des alliages à base d'aluminium, car il crée un risque d'introduction de sodium dans le métal filtré, et l'on sait que élément a une influence défavorable en particulier sur les alliages Al-Mg et Al-Si hypersiliciés, même à de trés faibles niveaux de concentration.

Parmi toutes les combinaisons possibles entre les fluorures qui viennent d'être cités, on peut mentionner les combinaisons binaires, ternaires ou même quaternaires dont le point de fusion sera choisi, de préférence au-dessus de 800°C.

C'est le cas, par exemple, des compositions suivantes, données en pourcentages pondéraux, à titre d'exemples non limitatifs:

| | | |
|---|---|---|
| $CaF_2$ (45%) — $MgF_2$ (55%) | P.F. 980°C | |
| $AlF_3$ (8,5%) — $KF$ (91,5%) | P.F. 820°C | |
| $AlF_3$ (41%) — $CaF_2$ (59%) | P.F. 840°C | |
| $BaF_2$ (85%) — $MgF_2$ (15%) | P.F. 910°C | |
| $BaF_2$ (30%) — $CaF_2$ (70%) | P.F. 1050°C | |
| $CaF_2$ (49%) — $MgF_2$ (49%) $LiF$ (2%) | P.F. 950°C | |

La nature et la forme des éléments constituant le bloc de filtration, objet de l'invention, peuvent également varier dans des limites assez larges.

Ces éléments peuvent être homogènes, c'est-à-dire constitués en totalité par le composé minéral actif, ou hétérogènes, c'est-à-dire constituées par un substrate inerte recouvert de composé minéral actif, ou un substrat inerte poreux imprégné de composé minéral actif. Le bloc de filtration, dans son ensemble, peut être constituée d'éléments de même nature (homogènes ou hétérogènes) ou d'un mélange d'éléments de nature différent.

Le substrat inerte peut être choisi parmi les composés minéraux ne réagissant pas avec les métaux à traiter. C'est le cas, en particulier, de l'alumine électrofondue (corindon), des composés alumine-zircone électrofondus (corindons à la zircone) et de différents produits céramiques silico-alumineux et du carbure de silicium.

Des substances carbonées telles que le graphite ou certains cokes sont également utilisables. D'autres composés tels que les nitrures ou oxynitrures de bore ou de silicium pourraient convenir mais leur prix élevé les rend peu attractifs.

La forme et la grosseur des éléments est également un facteur important pour la mise en oeuvre de l'invention. La forme des éléments détermine la surface active du bloc de filtration et la forme des canaux. Cette surface, qui est minimale dans le cas de grains sphériques, est augmentée par emploi de grains tabulaires ou aciculaires, ou de grains obtenus par concassage de billes ou autres formes géometriques simples. L'utilisation d'éléments en forme de bâtonnets ou de fibres allongées, dont le rapport longueur sur dimension transversale moyenne, peut se situer entre 5 et 200, par exemple, permet d'obtenir des blocs de filtration ayant une structure de feutre, très efficace en raison de la grande surface active, de la forme particulièrement tourmentée des canaux et de la porosité élevée propre à ce type d'enchevêtrement.

La grosseur des éléments et leur répartition granulomètrique est un des facteurs déterminant la porosité et la perméabilité du filtre, c'est-à-dire en pratique, sa capacité horaire de filtration.

On a constaté par exemple, qu'un bloc de filtration selon l'invention, constitué d'éléments en grains de 4 à 8 mm, sous une épaisseur de 40 millimètres, avait une capacité de filtration d'aluminium liquide à environ 750°C de l'ordre de 12 kg par centimètre carré de surface et par heure, avec une perte de charge de 10 à 20 mm d'aluminium liquide. La porosité d'un tel filtre est d'environ 40%.

Il est possible d'utiliser des éléments de dimensions beaucoup plus faibles, descendant jusqu'à quelques dizaines de micromètres, à condition que le procédé d'agglomération permette, d'obtenir une perméabilité suffisante pour assurer les débits de filtration élevés exigés par les processus industriels.

A partir d'éléments ayant la forme de bâtonnets de 1 mm de diamètre et de 15 mm de long, on obtient, après frittage, une structure feutrée dont la porosité atteint 80 à 90% et la capacité de filtration d'aluminium liquide à 750°C, est d'environ 25 kg par centimètre carré de surface et par heure, sous une épaisseur de 50 millimètres.

Les blocs de filtration selon l'invention étant constitués par frittage d'éléments, on peut leur conférer toutes les formes et dimensions exigées par les différents usages auxquels on les destine: plaques de formes géométriques simples, ou relativement complexes, cylindres, tubes, creusets, bouchons, busettes, que l'on peut disposer au-dessus d'une poche, dans un chenal de coulée, à l'entrée d'un moule. Dans ce dernier cas, on peut assurer le traitement ultime du métal au tout dernier instant avant sa mise en forme, à un endroit où toutes les causes de pollution et de souillures externes ont disparu et garantir ainsi une qualité de pièces coulées ou moulées, inacessible jusqu'alors.

Le procédé de fabrication des blocs de filtration peut être mis en oeuvre selon plusieurs variantes, selon la nature des grains élémentaires.

Un premier mode de mise en oeuvre consiste à fondre le composé minéral actif, à le couler en plaque mince de quelques millimètres d'épaisseur, à le concasser et à calibrer les éléments, par tamisage, à la granulomètrie désirée.

On met ensuite les éléments en place dans un moule et on chauffe, en atmosphère sèche, à une température légèrement inférieure à la température de fusion du composé minéral actif de façon à provoquer le frittage. Le frittage est effectué sans pression. Il est également possible d'exercer une pression modérée pendant le frittage, en réduisant corrélativement la température et/ou la durée de l'operation. De façon générale, l'agglomération par frittage est effectuée en atmosphère sèche, en évitant tout contact avec une flamme, à une température inférieure de 5 à 150°C environ au point de fusion du composé minéral, pendant une durée qui peut se situer entre 5 minutes et 1 à 2 heures.

La structure poreuse ainsi obtenue est mécaniquement très stable et résistante.

Une variante du procédé de fabrication consiste à comprimer ou pastiller le mélange de composé minéraux, puis à concasser les comprimés ou pastilles pour obtenir les éléments que l'on calibre par tamisage et agglomère par frittage comme on vient de la décrire.

L'obtention d'éléments en forme de bâtonnets ou de fibres allongées peut s'effectuer par différents procédés connus. On peut citer, à titre d'exemple, la coulée par gravité du composé minéral actif fondu au travers d'une filière en graphite comportant une pluralité d'orifices calibrés au diamètre désiré, suivie d'un refroidissement rapide, ou encore le filage, au travers d'une filière, d'une pâte constituée à partir du composé minéral actif en poudre ou en fins cristaux et d'un liant éliminable à chaud par évaporation ou pyrolyse, lors de l'agglomera-tion. Dans ce dernier cas, on obtient des fibres ou bâtonnets à structure poreuse.

Dans le cas où utilise des éléments hétérogènes, plusieurs variantes sont envisageables selon que ces éléments sont, ou non, poreux. La méthode générale consiste à revêtir ou à imprégner les éléments avec du composé minéral actif, par exemple par immersion dans ledit composé à l'état fondu, puis à procéder après refroidissement, à un nouveau concassage, suivi d'un calibrage par tamisage, d'une mise en forme et d'un frittage.

Dans le cas où l'on part d'un composé minéral actif en grains de très petites dimensions, de quelques dizaines de micromètres à un ou deux millimètres, il est possible, pour obtenir une structure à porosité suffisante, de procéder selon des procédés connus à un mélange préalable avec un liant qui s'éliminera lors de l'agglomeration, par exemple un composé organique sublimable tel que du camphre, de la naphtaline, de l'hexachloréthane, ou pyrolysable, tel que du polyéthylène, du polyuréthane.

Enfin, une autre variante consiste à préparer tout d'abord par tout procédé connu, une structure poreuse ou spongieuse à porosités ouvertes, en matériau inerte et à l'imprégner par un composé minéral actif.

Les exemples qui suivant permettant de préciser de façon non limitative, quelques méthodes d'obtention de blocs de filtration selon l'invention.

Exemple 1

On a fondu à environ 1000°C un mélange binaire comportant 50% en poids de $MgF_2$ et 50% en poids de $CaF_2$. Le liquide a été coulé sous forme d'une plaque de 5 mm d'épaisseur. La plaque, refroidie, a été concassée et les grains concassés ont été calibrés, par tamisage, entre 4 et 8 mm. On a ajouté aux grains calibrés 2% en poids de LiF que l'on a intimement mélangé par brassage prolongé. Le mélange a été mis en place dans un moule ayant la forme d'un disque de 190 mm de diamètre et de 40 mm d'épaisseur, vibré et tassé, puis fritté par maintien à 950°C pendant 20 minutes.

Aprés refroidissement, on a obtenu un disque présentant une porosité d'environ 40% ayant une capacité de filtration de 3,6 tonnes par heure d'aluminium liquide à environ 750°C, avec une perte de charge d'environ 15 mm d'aluminium liquide.

Exemple 2

On a fondu à environ 1000°C un mélange ternaire $CaF_2$: 49% en poids, $MgF_2$: 49% en poids, LiF: 2% en poids.

On a procédé comme dans l'exemple 1, les grains étant calibrés entre 5 et 8 mm, le moule ayant les dimensions de 200×200×40 mm, et le frittage étant réalisé par maintien de 35 minutes à 930°C. On a ainsi obtenu un bloc de filtration ayant 40% de porosité et une capacité de filtration de 5 tonnes par heures d'aluminium liquide à environ 750°C.

Exemple 3

On a pris l'alumine dite "tabulaire" en grains de 5 à 6 mm, que l'on a imprégnée, pendant 30 minutes, dans un bain de mélange ternaire $CaF_2$: 49% en poids, $MgF_2$: 49% en poids, LiF: 2% en poids, à 1050°C. Puis, l'alumine a été retirée du bain fondu, égouttée, refroidie, concassée et, à nouveau, calibrée entre 5 et 6 mm.

On a ensuite procédé à la mise en forme et au frittage dans les mêmes conditions que dans l'exemple 2.

On a ainsi obtenu un bloc de filtration ayant une porosité de 40% environ et une capacité de filtration de 4,6 tonnes par heure d'aluminium liquide à environ 750°C.

Exemple 4

On a préparé par coulée d'un mélange fondu de $MgF_2$: 49% en poids, $CaF_2$: 49% en poids et $LiF_2$: 2% en poids au travers d'une filière en graphite comportant des trous de 1 mm de diamètre, et refroidissement rapide dans un courant d'air sec, des bâtonnets ayant une section d'environ 1 mm et d'une longueur comprise entre 8 et 20 mm.

Ces bâtonnets ont été disposés en vrac dans un moule en graphite ayant la forme d'une plaque carrée de 200×200×40 mm; par vibration, on a obtenu un enchevêtrement des bâtonnets que l'on a agglomérés par frittage de 30 minutes à 920°C. On a ainsi obtenu un bloc de filtration d'une porosité de 85%, ayant une capacité de filtration de 10 tonnes par heure d'aluminium liquide à environ 750°C.

Exemple 5

On a placé un bloc filtrant obtenu comme dans l'exemple précédent ayant la forme d'un disque épais de diamètre 60 mm et d'apaisseur 40 mm dans la partie supérieure d'un tube d'alimentation d'une machine de coulée sous basse pression; le composé minéral actif était le ternaire: $BaF_2$: 85%, $MgF_2$: 13%, $CaF_2$: 2% (en poids) et l'alliage traité était un A-S7G (alliage à base d'aluminium contenant environ 7% de silicium et environ 0,9% de magnésium); un amélioration très notable a été constatée par la santé métallurique des pièces obtenues.

La mise en oeuvre des blocs de filtration selon l'invention permet l'obtention d'aluminium, de magnésium, d'alliages à base de l'un ou l'autre de ces métaux à un degré de pureté répondant aux exigences les plus sévères des utilisateurs (aéronautique, fils fins, feuilles minces pour boîtage et condensateurs).

Elle permet également le traitement d'autres métaux et alliages dont les points de fusion sont compatibles avec le point de fusion du composé minéral actif tels que le plomb, l'étain, le zinc, le cuivre ou des alliages à base de ces métaux. Le cas échéant, la composition du composé minéral actif peut être modifiée par adjonction d'autres substances telles que borates ou carbonates.

Ces blocs de filtration possèdant, en outre, une résistance mécanique et une cohésion très élevées. En service continu et prolongé, on n'a jamais observé de rupture ou de perte ou de décohesion de grains élémentaires ou de particules quelconques.

Avant mise en service, les blocs doivent être, de préférence, préchauffés à une température proche de celle du métal à filtrer, par tout moyen autre que le contact direct d'une flamme. En cas d'arrêt et. après refroidissement, la remise en service est assurée de la même façon par simple réchauffage.

**Revendications**

1. Bloc de filtration pour métaux et alliages liquides et plus particulièrement pour l'aluminium, le magnésium et les alliages à base d'aluminium et les alliages à base de magnésium, formé d'éléments dont au moins la partie externe est constituée par un composé minéral actif, agissant à la fois par effet mécanique et physico-chimique, possédant une structure à porosités ouvertes, caractérisé en ce qu'il est formé d'éléments frittés par maintien à une température inférieure de 5 à 150°C à la température de fusion du composé minéral actif pendant une durée comprise entre 5 minutes et deux heures, le composé minéral actif étant choisi parmi les fluorures alcalins, alcalinoterreux, les fluorures de magnésium et d'aluminium, les points de fusion des éléments frittés et du composé minéral actif étant de préférence supérieurs à 800°C, et en tous les cas supérieurs à la température à laquelle le métal ou alliage à filtrer est amené sur le bloc de filtration.

2. Bloc de filtration selon revendication 1, caractérisé en ce que les éléments frittés sont de grains de 4 à 8 mm de dimension moyenne.

3. Bloc de filtration selon revendication 1, caractérisé en ce que les éléments frittés sont en forme de bâtonnets dont le rapport longueur/dimension transversale moyenne est compris entre 5 et 200.

4. Bloc de filtration selon l'une quelconque des revendications 1 à 3, caractérisé en ce que ses éléments frittés ont une composition chimique homogène et sont entièrement constitués de composé minéral actif.

5. Bloc de filtration selon l'une quelconque des revendications 1 à 3, caractérisé en ce que ses éléments frittés comportent un noyau inerte revêtu de composé minéral actif.

6. Procédé de fabrication d'un bloc de filtration pour métaux et alliages liquides à effet mécanique et physico-chimique selon l'une quelconque des revendications 1 à 5, caractérisé en ce que l'on agglomère par frittage en atmosphère sèche, à une temperature inférieure de 5 à 150°C à la température de fusion du composé minéral actif, pendant une durée de 5 minutes à 2 heures, des éléments dont au moins la partie externe est constituée par le composé minéral actif, de façon à former une structure à porosité ouverte.

## Patentansprüche

1. Filtrationsblock für flüssige Metalle und Legierungen und insbesondere für das Aluminium, das Magnesium und die Legierungen auf Aluminiumbasis und die Legierungen auf Magnesiumbasis, der aus Elementen gebildet ist, von denen wenigstens der äußere Teil aus einer mineralischen aktiven Verbindung besteht, die gleichzeitig durch mechanischen und physikalisch-chemischen Effekt wirkt, mit einem offenporigen Gefüge, dadurch gekennzeichnet, daß er aus gesinterten Elementen durch Halten bei einer um 5 bis 150°C niedrigeren Temperatur als dem Schmelzpunkt der mineralischen aktiven Verbindung während einer Dauer im Bereich von 5 Minuten bis zwei Stunden gebildet ist, wobei die mineralische aktive Verbindung unter den Alkalifluoriden, erdalkalischen Magnesium- und Aluminiumfluoriden gewählt ist und die Schemlzpunkte der gesinterten Elemente und der mineralischen aktiven Verbindung vorzugsweise über 800°C und in allen Fällen über der Temperatur liegen, bei der das Metall oder die Legierung, das bzw. die zu filtrieren ist, auf den Filtrationsblock gelietet wird.

2. Filtrationsblock nach Anspruch 1, dadurch gekennzeichnet, daß die gesinterten Elemente Körner von 4 bis 8 mm mittlerer Abmessung sind.

3. Filtrationsblock nach Anspruch 1, dadurch gekennzeichnet, daß die gesinterten Elemente in Form von Stäbchen sind, deren Verhältnis von Länge zu mittlerer Querabmessung im Bereich von 5 bis 200 liegt.

4. Filtrationsblock nach einem der Ansprüche 1 bis 3, dadurch gekennzeichnet, daß seine gesinterten Elemente eine homogene chemische Zusammensetzung haben und ganz aus mineralischer aktiver Verbindung bestehen.

5. Filtrationsblock nach einem der Ansprüche 1 bis 3, dadurch gekennzeichnet, daß seine gesinterten Elemente einen inerten, mit mineralischer aktiver Verbindung überzogenen Kern aufweisen.

6. Verfahren zum Herstellen eines Filtrationsblocks für flüssige Metalle und Legierungen mit mechanischer und physikalisch-chemischer Wirkung nach einem der Ansprüche 1 bis 5, dadurch gekennzeichnet, daß man durch Sintern in trockener Atmosphäre bei einer um 5 bis 150°C niedrigeren Temperatur als dem Schmelzpunkt der mineralischen aktiven Verbindung während einer Dauer von 5 Minuten bis 2 Stunden Elemente agglomeriert, von denen wenigstens der äußere Teil aus der mineralischen aktiven Verbindung besteht, um so ein offenporiges Gefüge zu bilden.

## Claims

1. A filtration block for liquid alloys and metals and more particularly for aluminium, magnesium, aluminium-based alloys, and magnesium-based alloys, formed by elements, of which at least the outside part is formed by an active mineral compound, with a mechanical and a physical-chemical effect, and having an open pores structure, characterized in that said block is formed by elements sintered at a temperature which is from 5° to 150°C lower than the melting temperature of the active mineral compound, for a period of from 5 minutes to 1 hour, said active mineral compound being selected from alkali and alkaline-earth metal fluorides, and fluorides of magnesium and aluminium, the melting points of the sintered elements and of the active mineral compound being preferably higher than 800°C and at least higher than the temperature at which the metal or alloy to be filtered is introduced onto the filtration block.

2. A filtration block according to claim 1, characterized in that the sintered elements are formed by grains having a mean dimension from 4 to 8 millimeters.

3. A filtration block according to claim 1 characterized in that the sintered elements are formed by sticks wherein the ratio between their length and their means traverse dimension is from 5 to 200.

4. A filtration block according to claim 1, characterized in that the elements thereof are of a homogeneous chemical composition and are entirely formed by an active mineral compound.

5. A filtration block according to claim 1, characterized in that the elements thereof comprise an inert core coated with active mineral compound.

6. A process for producing a filtration block for liquid metals and alloys, with a mechanical and physico-chemical effect, according to any of claims 1 to 5, characterized in that the elements, of which at least the outside part is formed by an active mineral compound, are agglomerated by sintering in a dry atmosphere, at a temperature which is from 5 to 150°C lower than the melting temperature of the active mineral compound, for a period of from 5 minutes to 1 hour.